# EUROPÄISCHE PATENTSCHRIFT

(11) **EP 1 554 793 B1**
(45) Veröffentlichungstag und Bekanntmachung des Hinweises auf die Patenterteilung: **22.11.2006**
(21) Anmeldenummer: 03775201.1
(22) Anmeldetag: 20.10.2003
(51) Int. Cl.: H02K 5/20, H02K 15/14

(54) **TAUCHLACK-BESCHICHTETER KÜHL-GEHÄUSEMANTEL FÜR EINE ELEKTRISCHE MASCHINE**
DIPPING VARNISH-COATED COOLING SHELL OF A HOUSING FOR AN ELECTRIC MACHINE
ENVELOPPE DE LOGEMENT DE MACHINE ELECTRIQUE POURVUE D'UN REVETEMENT APPLIQUE PAR VERNISSAGE AU TREMPE

(30) Priorität: 18.10.2002 DE 20216113 U
(43) Veröffentlichungstag der Anmeldung: 20.07.2005
(73) Patentinhaber: BAUMÜLLER NÜRNBERG GMBH, D-90482 Nürnberg (DE)
(72) Erfinder: WEHNER, Hans-Jürgen, 91338 Igensdorf (DE); SONNAUER, Günter, 90419 Nürnberg (DE)
(74) Vertreter: Götz, Georg Alois
(86) Internationale Anmeldenummer: PCT/EP2003/011590
(87) Internationale Veröffentlichungsnummer: WO 2004/036719

(56) Entgegenhaltungen:
- EP-A- 0 560 993
- EP-A- 0 631 365
- DE-C- 926 676
- US-A- 5 084 642
- PATENT ABSTRACTS OF JAPAN vol. 007, no. 040 (E-159), 17. Februar 1983 (1983-02-17) -& JP 57 193952 A (TOKYO SHIBAURA DENKI KK), 29. November 1982 (1982-11-29)
- PATENT ABSTRACTS OF JAPAN vol. 1996, no. 08, 30. August 1996 (1996-08-30) -& JP 08 111966 A (MITSUBISHI ELECTRIC CORP), 30. April 1996 (1996-04-30)
- PATENT ABSTRACTS OF JAPAN vol. 012, no. 108 (E-597), 7. April 1988 (1988-04-07) -& JP 62 236337 A (MITSUBISHI ELECTRIC CORP), 16. Oktober 1987 (1987-10-16)

## Beschreibung

Die Erfindung betrifft einen kühlbaren Gehäusemantel für eine elektrische Maschine, welcher als durch Gießen hergestelltes Formteil vorliegt. Zur Aufnahme einer koaxialen bzw. konzentrischen Innenläufer-/Ständer-Anordnung einschließlich Wicklungen und Wickelköpfe ist der Gehäusemantel mit einer bezüglich einer gedachten Maschinen-Drehachse symmetrischen, konzentrischen und/oder koaxialen Durchführung gestaltet. Die Kühlung ist mittels eines Umlaufs von Kühlmedium durch ein oder mehrere Kühl-Kanäle realisiert, welche den Gehäusemantel durchsetzen.

Zum Stand der Technik wird zunächst auf DE 199 49 140 A1, DE 199 39 760 A1, DE 199 39 013 A1, DE 196 48 134 A1, DE 196 24 519 A1, DE 42 43 716 A1, DE 39 41 474 A1 und US 50 84 642 A verwiesen.

Ein gattungsgemäßer Elektromotor mit Flüssigkeitskühlung ist in DE 100 45 424 beschrieben. Ein Gehäusemantel ist hohl ausgeführt und in mehrere Kanäle unterteilt, die von Kühlmedium durchströmt werden. Auf beiden Seiten des Elektromotors befindet sich im jeweils zugehörigen Lagerschild ein Verbindungskanal für die Zufuhr der Kühlfüssigkeit vom Gehäusemantel in das Lagerschild. Die Lagerschildinnenräume werden dabei vollständig mit Kühlfüssigkeit ausgefüllt, so dass die Lager und Kupplungen für anzutreibende Pumpen gekühlt und gleichzeitig geschmiert werden. Die Lagerschilder sind separat vom Gehäusemantel als einzelne Gußteile hergestellt. Als Kühlflüssigkeit wird Hydrauliköl oder Wasser erwähnt, bei dem durch Filterung mögliche Verunreinigungen entfernt werden, um eine Verblockung der Kanäle im Elektromotor zu verhindern. Nicht angesprochen wird jedoch das Problem der Korrosion, welches bei einem Aluminium-Mantelgehäuse und dieses durchströmende Kühlwasser mit Verschmutzungen und Verunreinigungen gravierend wird. Es entsteht die Gefahr, dass dann das Aluminium sehr schnell oxidiert und korrodiert. Dies führt dann im Inneren der Kühlkanäle zum Rosten, und es können sich Rostpartikel lösen, absondern und das Kühlkanalsystem verstopfen.

Ein Korrosionsschutz durch Kathophorese-Tauchlackierung im Zusammenhang mit Elektromotoren ist zwar in DE 43 06 897 A1 beschrieben. Jedoch wird angeregt, den Stator selbst, ohne sachlichen Zusammenhang mit einer Motorkühlung, mittels eines ersten Tauchvorgangs einer Kathophorese-Lackierung zu unterwerfen, wobei eine erste Grundschicht aufgetragen wird. Es sei dann noch zwingend ein zweiter, nachfolgender Tauchvorgang notwendig, mittels welchem ein dünnflüssiger, gegen chemische Einflüsse beständiger Ein- oder Mehrkomponentenlack als Versiegelungsschicht aufgebracht wird. Dadurch soll erreicht werden, dass die Versiegelungsschicht, z. B. die vorwiegend in Eckbereichen oder im Bereich des Anlaufkupfers nach Auftrag der Grundschicht verbleibenden Poren und Spalten verschlossen und somit die Oxidationsfestigkeit erhöht und Korrosionen der Stator- und der Rotormaterialen ausgeschlossen werden. Damit soll ein Korrosionsschutz für in Wasser laufende Elektromotoren erreicht werden, die als Antriebsorgan für Pumpen, insbesondere Spaltpolmotoren dienen.

Der Erfindung liegt die Aufgabe zugrunde, bei einem kühlbaren Gehäusemantel der eingangs genannten Gattung die Korrosionsfestigkeit, Lebensdauer und Zuverlässigkeit des Kühlmittel-Strömungskreislaufes und des gesamten Kühlsystems der elektrischen Maschine zu erhöhen. Zur Lösung wird der im Schutzanspruch 1 angegebene, kühlbare Gehäusemantel vorgeschlagen. Weitere Einzelheiten und vorteilhafte Ausgestaltungen der Erfindung ergeben sich aus den abhängigen Ansprüchen.

Erfindungsgemäß werden also wenigstens die Innenflächen des Gehäusemantels und insbesondere die Oberflächen der Innenwandungen der darin eingearbeiteten Kühlkanäle mittels des Tauchverfahrens, insbesondere eines kathodischen Tauchlackverfahrens bzw. einer Kathophorese-Lackierung zum Korrosionsschutz beschichtet. Solche Verfahren sind an sich aus der Kfz-Industrie bekannt.

Mit der Erfindung läßt sich der Vorteil erzielen, dass Kühlflüssigkeit oder -wasser auch schlechterer Qualität insbesondere mit aggressiven Verunreinigungen zur Kühlung des insbesondere gußeisernen Gehäusemantels verwendet werden kann. Der mit dem genannten kathodischen Tauchlack-Verfahren (KTL-Verfahren) aufbringbare Tauchlack ist nämlich mechanisch sehr hart und kann verhindern, dass das gegenüber aggressivem Kühlwasser empfindliche Gußeisen, insbesondere Aluminium, des Gehäusemantels korrodiert. Mit dem KTL-Verfahren ist eine auch gegen chemisch aggressiv verunreinigtem Wasser sehr beständige Beschichtung erzielbar.

Gemäß einer besonderen Ausbildung wird für den abgeschiedenen (Elektro-) Tauchlack Epoxid-Amin-Urethan als chemische Basis verwendet. Der vorzugsweise mit Aluminium hergestellte, gegossene Gehäusemantel stellt beim elektrolytischen Beschichtungsvorgang die negativ gepolte Kathode dar. Die gewünschte Schichtdicke, vorzugsweise zwischen 10 µm und 50 µm oder 15 µm und 40 µm, wird dabei über die Höhe der Tauchbadspannung und der Zeit, innerhalb welcher diese Spannung anliegt, eingestellt. Im Rahmen der Erfindung ist eine Lackhärte (Bucholz-Härte nach ISO 2815 (DIN 53153)) ≥ 80 anzustreben.

Gemäß einer vorteilhaften Ausbildung der Erfindung, bei welcher der Gehäusemantel mehrere Gehäusemantelseiten, insbesondere parallele Stirnseiten, aufweist, sind die Kühlkanäle an wenigstens einer ersten Gehäusemantelseite mit nach außen frei zugänglichen Öffnungen gestaltet. Indem also die Kühlkanäle an einer Gehäusemantelseite offen enden, läßt sich dort beim Eintauchen in ein Lackbecken der Elektrotauchlack an die zu beschichtenden Innenflächen des Kühlkanalsystems bringen. Nach Beendigung des KTL-Prozesses läßt sich die KTL-Flüssigkeit durch die freien Öffnungen wieder recht schnell entfernen, bzw. der Gehäusemantel läßt sich von der dort auslaufenden KTL-Flüssigkeit besonders leicht entleeren.

Die Möglichkeit des Entleerens von Tauchlack wird noch weiter dadurch gefördert, dass auch an der gegenüberliegenden, vorzugsweise einstückig angegossenen Gehäusemantelseite eine oder mehrere Bohrungen oder sonstige Durchbrüche ausgebildet sind. Durch diese kann zusätzlich KTL-Flüssigkeit eingefüllt werden und auslaufen. Zweckmäßig sind die Bohrungen mit Innengewinde versehen, so dass für den normalen Kühl-Dauerbetrieb des entsprechenden Elektromotors oder -generators eine einfach montierbare Abdichtungsmöglichkeit der angegossenen Stirnseite über vorzugsweise mit Dichtungsringen versehene Verschlußschrauben gegeben ist.

Weitere Einzelheiten, Merkmale und Vorteile auf der Basis der Erfindung ergeben sich aus der nachfolgenden Beschreibung bevorzugter Ausführungsformen der Erfindung sowie aus den Zeichnungen. Diese zeigen in:
- Figur 1: eine perspektivische Darstellung eines beispielhaften Kühl-Gehäusemantels nach der Erfindung,
- Figur 2: eine perspektivische Ansicht auf die erfindungsgemäß angegossene Stirnseite des Gehäusemantels nach Fig.1, der durch Anschrauben der Abdeckeinrichtung auf der anderen Stirnseite zum Gesamt-Kühlgehäuse ergänzt ist,
- Figur 3: das Gesamtgehäuse gemäß Figur 2 in perspektivischer Ansicht auf die mit einer separaten Abdeckeinrichtung versehene Stirnseite,
- Figur 4: in axialer Schnittdarstellung eine Anordnung des erfindungsgemäßen Kühlgehäuses mit darin aufgenommenem Ständer für eine elektrische Maschine,
- Figur 5: die Anordnung in der Draufsicht gemäß Richtung V in Figur 4,
- Figur 6: eine Stirnansicht gemäß Richtung VI in Figur 4,
- Figur 7: eine Stirnansicht gemäß Richtung VII in Figur 4,
- Figur 8: eine Darstellung des als Abdeckeinrichtung dienenden Druckrings ohne aufgenommenen Stator und ohne Ständerwicklungen in radialer Seitenansicht,
- Figur 9: eine Stirnansicht gemäß Richtung IX in Figur 8,
- Figur 10: eine Stirnansicht gemäß Richtung X in Figur 8,
- Figur 11: eine Draufsicht gemäß Richtung XI in Figur 9, und
- Figur 12: in perspektivischer Darstellung einen vergrößerten, abgebrochen gezeichneten Ausschnitt auf den Bereich mit Dichtungseinrichtung zwischen Gehäusemantel-Stirnseite und gegenüberliegender Stirnseite der Abdeckeinrichtung bzw. des Druckrings.

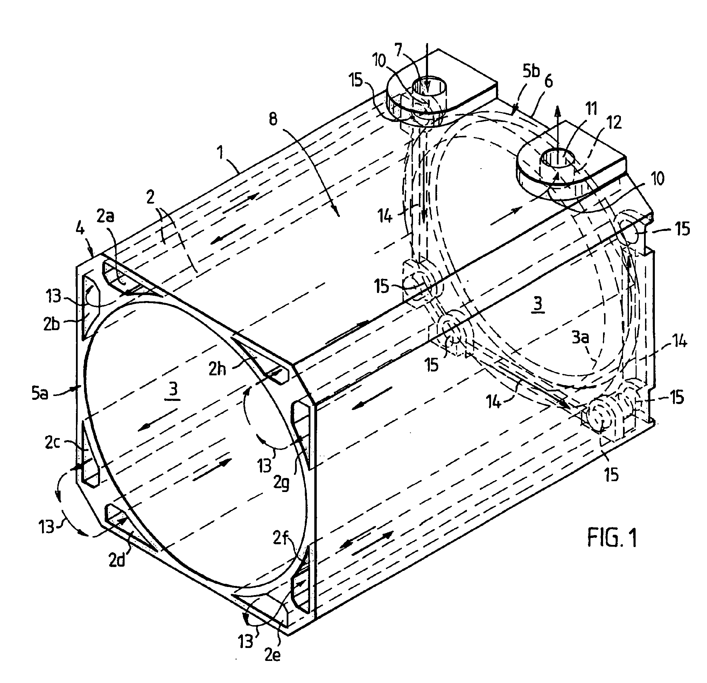

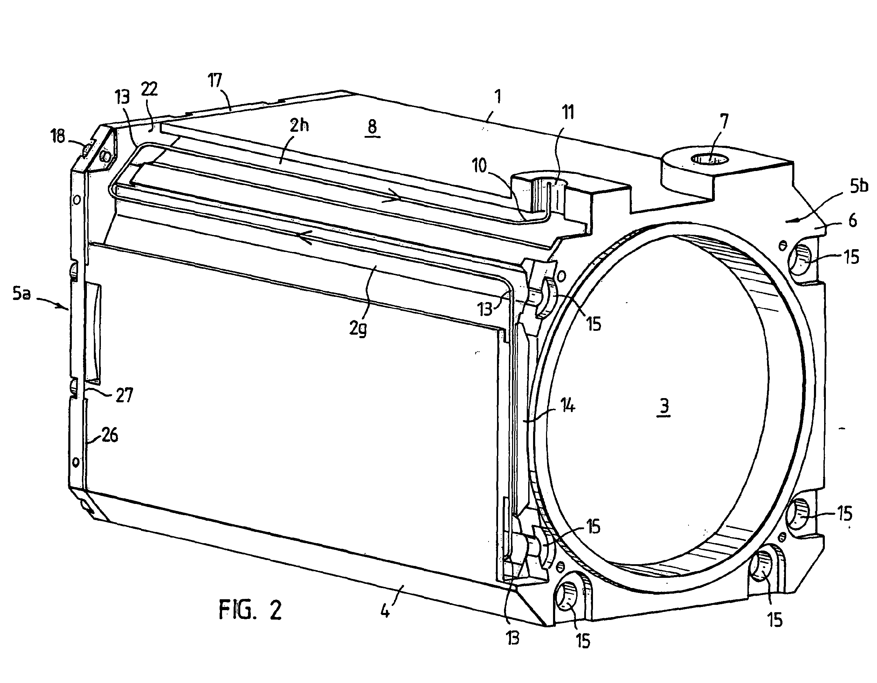

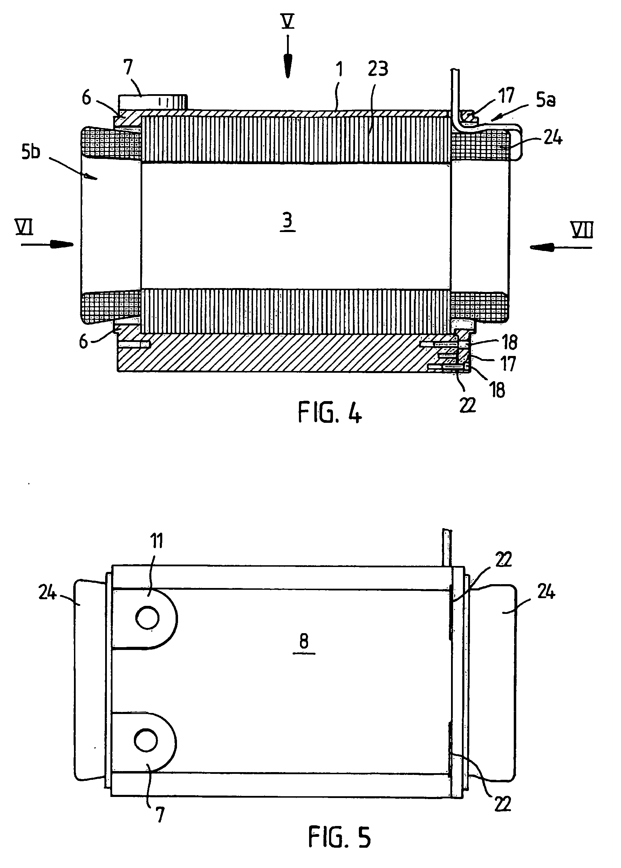

Gemäß Figur 1 ist der Gehäusemantel 1 als einstückiges Aluminium-Gußteil mit insgesamt acht achsparallelen Kühlkanälen 2 hergestellt. Der Gehäusemantel 1 hat in seinem Inneren eine lichte Durchführung 3, welche bezüglich einer gedachten Maschinen-Drehachse symmetrisch ist und der Aufnahme einer koaxialen bzw. konzentrischen Innenläufer-/Ständer-Anordnung nebst Wicklungen und Wickelköpfen dient (wie auch in Figur 4 dargestellt). Die Kühlkanäle 2 verlaufen parallel zur gedachten Maschinen-Drehachse (achsparallel) zwischen einer die Durchführung 3 umgrenzenden Aussparungskontur 3a und der achsparallelen Außenwandung 4 des Gehäusemantels 1. Pro Kreisumfangs-Quadrant sind zwei Kühlkanäle 2 nebeneinander verlaufend angeordnet. Ihre Enden sind an einer ersten Gehäusemantel-Stirnseite 5a zweier paralleler Stirnseiten 5a, 5b offengelassen bzw. frei zugänglich. Wie auch aus Figur 2 hervorgeht, enden die Kühlkanäle 2 bei der zweiten Stirnseite 5b an einer jeweiligen Gußwandung 6 bzw. sind dort zugegossen. Infolgedessen ist ein Austritt von Kühlmedium bzw. Kühlflüssigkeit über die zweite Stirnseite 5b nicht möglich. Dem im Bereich der zweiten Stirnseite 5b liegenden Ende eines ersten Kühlkanals 2a kann Kühlmedium über eine Einlaßöffnung 7 zugeführt werden, welche auf einer Längsoberseite 8 und dort in einem an der zweiten Stirnseite 5b angrenzenden Eckbereich als quer zur achsparallelen Richtung verlaufender Einführungskanal 9 gegebenenfalls mit einer Umlenkkammer für eine 90°-Strömungsumlenkung 10 ausgebildet ist. Entsprechend ist auf der Längsoberseite 8 im gegenüberliegenden Eckbereich ebenfalls an der zweiten Stirnseite 5b eine Auslaßöffnung 11 ausgebildet, welche über eine 90°-Strömungsumlenkung 10 mit dem im Bereich der zweiten Stirnseite 5b endenden, letzten Kühlkanal 2h kommuniziert. Entsprechend dem Einführungskanal 9 bei der Einlaßöffnung 7 besitzt die Auslaßöffnung 11 einen die Längsoberseite 8 ebenfalls durchsetzenden Ausführungskanal 12, der quer zur achsparallelen Richtung verläuft.

Zur Bildung des geschlossenen Kühlkreislaufs müssen an der ersten Stirnseite 5a zwischen den dort offenen Enden zweier benachbarter Kühlkanäle 2a bzw. 2b, 2c bzw. 2d, 2e bzw. 2f, 2g bzw. 2h jeweils 180°-Strömungsumlenkungen 13 stattfinden. Damit alterniert jeweils eine 90°-Strömungsumlenkung 10 auf der entgegengesetzten, zweiten Stirnseite 5b innerhalb der dort angegossenen Gußwandung 6 (der Übersichtlichkeit halber nur in den Bereichen der Ein-/Auslaßöffnungen 7, 11 gezeichnet). Zwischen den (nicht gezeichneten) 90°-Strömungsumlenkungen, die nicht im Bereich einer Ein-/Auslaßöffnung 7, 11 stattfinden, verlaufen jeweils Querdurchführungen 14 innerhalb der Gußwandung im rechten Winkel zu den Kühlkanälen. Die nach dem Einlaß 11 noch erfolgenden 90°-Strömungsumlenkungen 10 münden jeweils in eine der Qerdurchführungen. Damit läßt sich innerhalb der Gußwandung 6 der zweiten Stirnseite 5b strömendes Kühlmedium von einem Kreisumfangs-Quadranten zum jeweils benachbarten befördern. Jede Querdurchführung 14 verbindet das in der zweiten Stirnseite 5b liegende Ende eines Kühlkanals 2 mit dem ebenfalls in der zweiten Stirnseite 5b liegenden Kühlkanalende eines benachbarten Kreisumfangs-Quadranten.

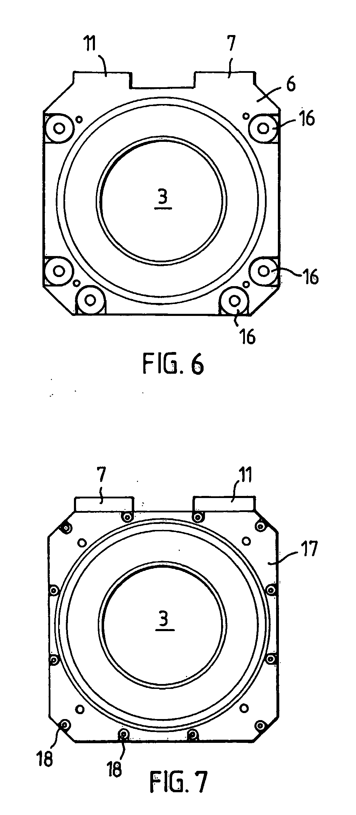

Gemäß Figuren 1 und 2 sind an der zweiten Stirnseite 5b stirnseitig ausgerichtete Montage- und Ablaufbohrungen 15 ausgebildet, die jeweils mit einem der Kühlkanäle 2b-2g bzw. deren Enden und den damit kommunizierenden Querdurchführungen 14 in Verbindung stehen (ausgenommen der im Strömungskreislauf erste und letzte Kühlkanal 2a beziehungsweise 2h) und nach außen führend die Gußwandung 6 durchsetzen. Sie sind zweckmäßig mit Innengewinde versehen, um während des Herstellungs- und Gießprozesses Halterungselemente für Gießformkerne in den Hohlräumen des Gehäusemantels fixieren zu können. Zudem kann durch die Bohrungen 15 die Flüssigkeit eines Tauchlackbads auslaufen, wenn der Gehäusemantel zur korrosionsfesten Beschichtung insbesondere seiner Hohlraumflächen Tauchlackverfahren unterworfen wird (siehe oben). Die (nicht gezeichneten) Innengewinde der Bohrungen 15 können auch der Aufnahme und Fixierung von mit Dichtungsringen versehenen Verschlußschrauben 16 (vgl. Figur 6) dienen, um im praktischen Motorbetrieb beispielsweise den Umlauf des Kühlmediums gegenüber der Außenumgebung abzudichten. Der erste und letzte Kühlkanal 2a bzw. 2h dagegen stehen nicht mit Montage- und Ablaufbohrungen, sondern wie ausgeführt mit den Ein- und Auslässen 7, 11 in Verbindung, durch welche ebenfalls Tauchlackbad-Flüssigkeit nach dem Gießprozeß ablaufen kann.

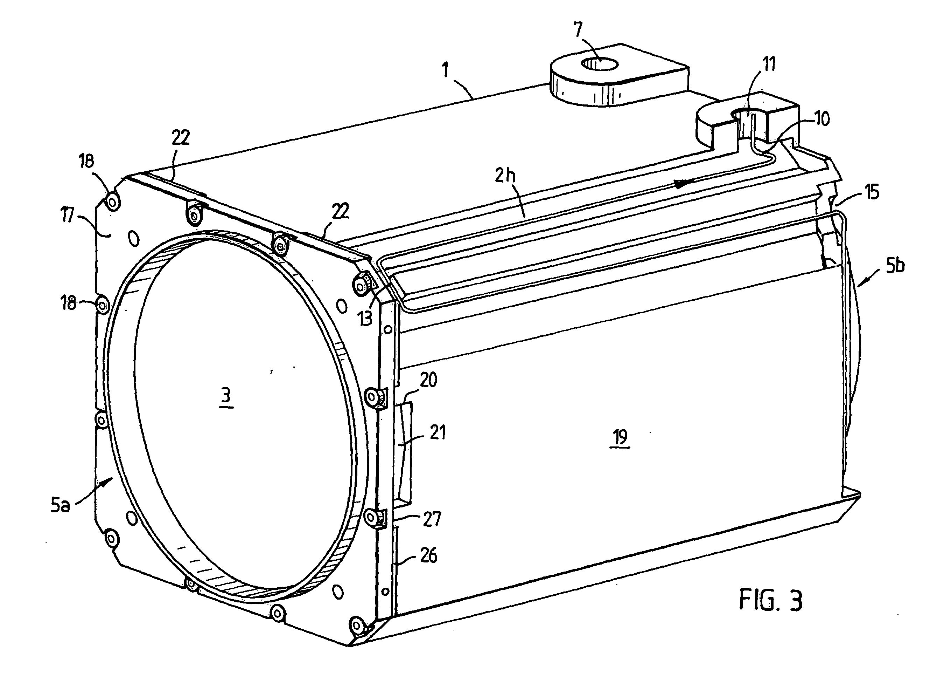

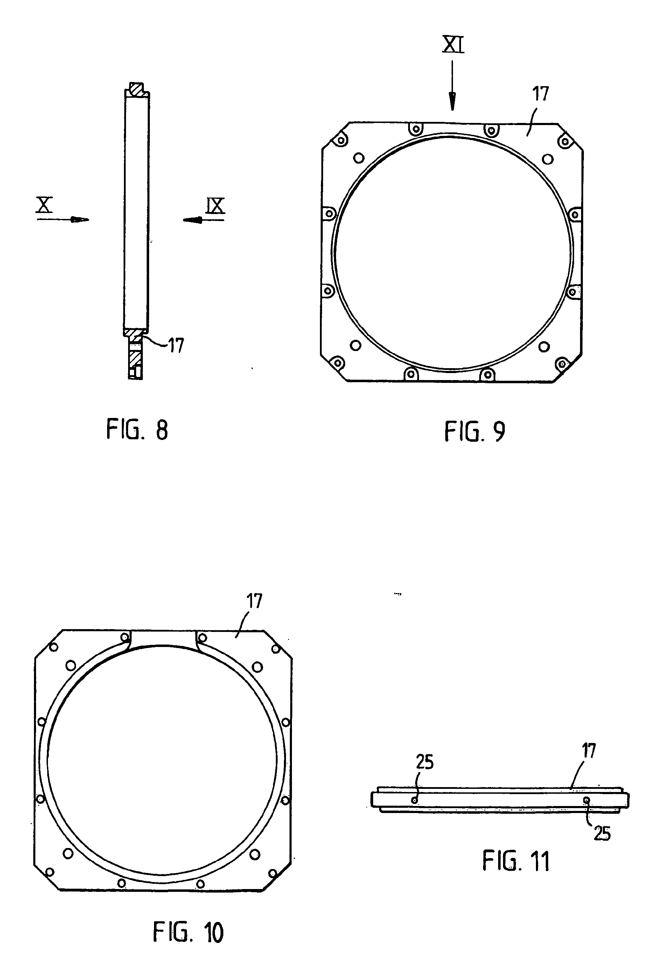

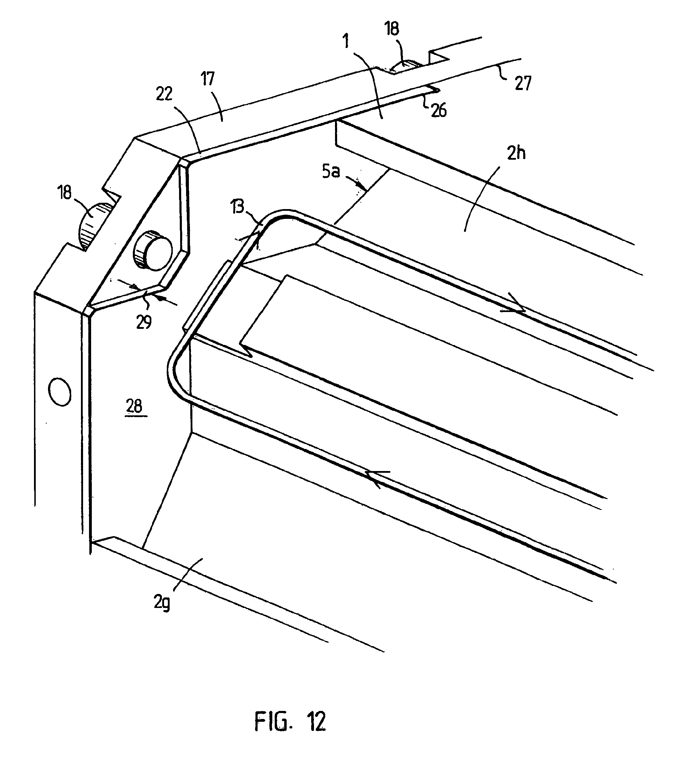

Gemäß Figur 3 sind die an der ersten Stirnseite 5a befindlichen Öffnungen der Kühlkanäle 2 durch einen separat hergestellten Druckring 17 (vgl. auch Figuren 9-11) gegenüber außen abgeschlossen. Dieser ist mittels einer um die gedachte Drehachse umlaufenden Reihe Fixierschrauben 18 an der anliegenden Stirnwandung des Gehäusemantels 1 befestigt. Eine achsparallele Seitenwandung 19 des Gehäusemantels 1 ist an der ersten Stirnseite 5a mit einer länglich-rechteckigen Aussparung 20 gestaltet, die zusammen mit dem gegenüberliegenden Druckring 17 eine freie Öffnung 21 begrenzt, welche der Durchführung von Kabelanschlüssen für die Wicklungen oder dergleichen dienen kann. Diese müssen selbstverständlich gegenüber dem Strömungskreislauf des Kühlmediums abgedichtet sein. Dazu sind Flachdichtkörper 22 (siehe auch Figur 12 und zugehörige Erläuterungen) sandwichartig zwischen den gegenüberliegenden Stirnwänden des Druckrings 17 und des Gehäusemantels 1 angeordnet.

In Figur 4 ist dargestellt, dass der Gehäusemantel 1 zusammen mit dem daran befestigten Druckring 17 ein Ständerblechpaket 23 bzw. zugehörige Wickelköpfe 24 koaxial umfaßt. Erfindungswesentliche Einzelheiten sind dem geübten Leser technischer Zeichnungen aus den Figuren 4-7 ohne nähere Erläuterungen ohne weiteres erkennbar, zumal übereinstimmende Bezugsziffern gleiche Teile bezeichnen.

Von den den Druckring 17 darstellenden Figuren 8-11 zeigt Figur 9 diejenige Druckring-Stirnseite, welche gemäß Figuren 1-3 dem Gehäusemantel abgewandt ist, während Figur 10 umgekehrt diejenige Stirnseite zeigt, welche im montierten Zustand auf der gegenüberliegenden Stirnwandung bzw. ersten Stirnseite 5a des Gehäusemantels anliegt. Gemäß Figur 11 sind auf der Oberseite der Mantelfläche des Druckrings 17 Befestigungsbohrungen 25 eingeformt, worüber ein Klemmenkasten oder dergleichen montiert werden kann.

Gemäß Figur 12 ist der Gehäusemantel 1 auf der ersten Stirnseite an seiner dem Druckring 17 gegenüberliegenden Wandung mit einer beispielsweise eingefrästen Aufnahmevertiefung 26 oder -aussparung gestaltet. Die Tiefe ist so bemessen, dass darin der Flachdichtkörper 22 mit entsprechender Dicke 29 Aufnahme finden kann. Letzterer dient dazu, die Enden der beiden Kühlkanäle 2g, 2h sowie die beide verbindende 180°-Strömungsumlenkung 13 in einer Umlenkkammer 29 gegenüber der sonstigen Umgebung abzudichten. Der Flachdichtkörper 22 bildet für die Umlenkkammer 28gh gleichsam eine Dichtungswandung 22. Dabei liegt es im Rahmen der Erfindung, die Flachdichtkörper 22 etwas einzuklemmen bzw. zwischen dem Druckring 17 und der gegenüberliegenden Stirnwandung des Gehäusemantels 1 zusammenzudrücken. Dazu erstrecken sich die Flachdichtkörper beziehungsweise Dichtungswandungen 22 über die Umlenkkammer 28gh hinaus in den peripheren Bereich zwischen den einander zugewandten Stirnwandungen des Druckrings 17 und des Gehäusemantels 1. Das Zusammendrücken braucht jedoch nur relativ geringfügig zu erfolgen, weil die der Aufnahmevertiefung 26 in Querrichtung unmittelbar folgende Stoßfuge 27 durch das Aneinanderliegen der jeweils metallischen Wandflächen des Druckrings 17 und des Gehäusemantels 1 gebildet ist. Mittels der Fixierschrauben 18 läßt sich das dichtende Aneinanderstoßen der Metallflächen im Bereich der Stoßfuge 27 mit hohem Anpressdruck realisieren, ohne dass dabei die Flachdichtkörper 22 über Gebühr zusammengedrückt werden und mechanisch beeinträchtigt werden müßten. Denn sie finden ausreichend Platz in der Aufnahmevertiefung 26. Andererseits schafft die Verschraubung des Druckrings 17 mit der gegenüberliegenden Wandung des Gehäusemantels 1 "Block - auf - Block" Festigkeit und Stabilität. Aus Figuren 2, 3, 5 und 12 läßt sich ableiten, dass sich im gezeichneten Beispiel vier jeweils eine Dichtungswandung 22 erfassende Aufnahmevertiefungen 26 mit vier Stoßfugen 27 im Rahmen einer die gedachte Maschinen-Drehachse umgebenden Reihe abwechseln. Erkennbar ist in Figur 12 auch, dass die beiden dortigen Kühlkanäle 2g, 2h an der ersten Stirnseite 5a in der gemeinsamen Umlenkkammer 28gh enden, welche von dem Flachdichtkörper 22 wandartig begrenzt und abgedichtet ist.

### Bezugszeichenliste

- 1: Gehäusemantel
- 2, 2a-2h: Kühlkanäle
- 3: Durchführung
- 4: Wandung
- 5a: erste Stirnseite
- 5b: zweite Stirnseite
- 6: Guß-Stirnwandung
- 2a: erster Kühlkanal
- 7: Einlaßöffnung
- 2h: letzter Kühlkanal
- 8: Längsoberseite
- 9: Einführungskanal
- 10: 90°-Strömungsumlenkung
- 11: Auslaßöffnung
- 12: Ausführungskanal
- 13: 180°-Strömungsumlenkung
- 14: Querdurchführung
- 15: Montage- und Ablaufbohrung
- 16: Verschlußschraube
- 17: Druckring
- 18: Fixierschrauben
- 19: Längsseite
- 20: Aussparung
- 21: Öffnung
- 22: Flachdichtkörper beziehungsweise Dichtungswandung
- 23: Ständerblechpaket
- 24: Wickelkopf
- 25: Befestigungsbohrung
- 26: Aufnahmevertiefung
- 27: Stoßfuge
- 28gh: Umlenkkammer
- 29: Dicke

## Patentansprüche

1. Kühlbarer Gehäusemantel (1) für eine elektrische Maschine, welcher als gegossenes Formteil hergestellt ist, zur Aufnahme einer konzentrischen Innenläufer-/Ständer-Anordnung (23) nebst Wicklungen und Wickelköpfen (24) mit einer bezüglich einer gedachten Maschinen-Drehachse symmetrischen, konzentrischen und/oder koaxialen Durchführung (3) gestaltet ist und zur Bildung eines Umlaufs von Kühlmedium von einem/einer oder mehreren Kühl-Kanälen (2,2a-h) durchsetzt ist, **gekennzeichnet durch** eine Beschichtung der Mantel-Innenflächen einschließlich der Kanalinnenwandungen über ein kathodisches Tauchlackverfahren.

2. Gehäusemantel nach Anspruch 1, **dadurch gekennzeichnet, dass** die Beschichtungsdicke zwischen 10 µm und 50 µm beträgt.

3. Gehäusemantel nach Anspruch 1 oder 2, **gekennzeichnet durch** die Verwendung eines vorzugsweise kathophoretisch abgeschiedenen Tauchlacks auf der Basis von Epoxid-Amin-Urethan.

4. Gehäusemantel nach einem der vorangehenden Ansprüche, **gekennzeichnet durch** eine Herstellung des Mantelkörpers mit Aluminium.

5. Gehäusemantel nach einem der vorangehenden Ansprüche, **dadurch gekennzeichnet, dass** die Kühlkanäle (2) an wenigstens einer ersten (5a) mehrerer Gehäusemantelseiten (5a,5b) mit nach außen frei zugänglichen Öffnungen enden.

6. Gehäusemantel nach Anspruch 5, **dadurch gekennzeichnet, dass** bei einer zweiten der Gehäusemantelseiten (5a,5b) die Kühl-Kanäle (2) an einer durch Gießen gebildeten Gehäusewandung enden und so gegenüber außen dicht verschlossen sind.

7. Gehäusemantel nach einem der Ansprüche 5 oder 6, **dadurch gekennzeichnet, dass** die Gehäusemantelseiten (5a,5b) zwei einander abgewandte und/oder parallele Stirnseiten umfassen, von denen bei der ersten (5a) die Kühl-Kanäle (2) nach außen frei zugänglich enden, und bei der zweiten (5b) die Kühl-Kanäle an einer dort durch Gießen gebildeten Gehäusestirnwandung (6) enden und so gegenüber außen dicht verschlossen sind.

8. Gehäusemantel nach Anspruch 6 oder 7, **dadurch gekennzeichnet, dass** die zweite (5b), durch Gießen gebildete Gehäusemantelseite (6) oder -stirnwand einstückig an den sonstigen Gehäusemantel-Körper anschließt.

9. Gehäusemantel nach Anspruch 7 oder 8, **dadurch gekennzeichnet, dass** die zweite (5b), durch Gießen gebildete Gehäusestirnwandung (6) im Inneren mit Hohlräumen dergestalt versehen ist, dass diese Hohlräume mit den Kühl-Kanälen (2) kommunizierende Umlenkkammern und/oder QuerDurchführungen (14) bilden, welche bezüglich einer gedachten Maschinen-Drehachse quer verlaufen und die Kanalenden und/oder die Umlenkkammern miteinander verbinden.

10. Gehäusemantel nach einem der vorangehenden Ansprüche, wenigstens jedoch nach Anspruch 6, **dadurch gekennzeichnet, dass** die durch Gießen gebildete und die Kühl-Kanäle (2) abschließende Gehäusemantelseite (6) in ihrer Gußwandung eine oder mehrere Bohrungen (15) oder sonstige Durchbrüche aufweist.

11. Gehäusemantel nach Anspruch 10, **dadurch gekennzeichnet, dass** die Bohrungen oder Durchbrüche Innengewinde für die Befestigung von Gießkern-Halteelementen und/oder zur Aufnahme von Schraubverschlüssen(16) aufweisen.

12. Gehäusemantel nach Anspruch 11, **dadurch gekennzeichnet, dass** die Schraubverschlüsse (16) mit Dichtungsringen versehen sind.

13. Gehäusemantel nach Anspruch 10, 11 oder 12, **dadurch gekennzeichnet, dass** die Bohrungen (15) oder Durchbrüche als Ein- oder Auslässe (7,11) für Kühlmedium ausgestaltet und mit den Kühl-Kanälen, gegebenenfalls über eine Umlenkkammer und/oder Quer-Durchführung (14), kommunizieren.

14. Gehäusemantel nach einem der vorangehenden Ansprüche, **dadurch gekennzeichnet, dass** wenigstens an einer ersten Gehäusemantelseite (5a) Befestigungselemente (18), beispielsweise Innengewindebohrungen, ausgebildet sind, um eine Abdeckung, beispielsweise ein Lagerschild oder einen Druckring (17), anzubringen.

## Claims

1. Coolable housing jacket (1) for an electric motor, which is manufactured as a cast moulded part, is formed for receiving a concentric internal rotor/stator arrangement (23) together with windings and winding overhang (24) with a through-passage (3) that is symmetrical, concentric and/or coaxial with respect to a hypothetical motor axis of rotation, and which is penetrated by one or more cooling channels (2, 2a-h) to form a coolant circuit, **characterised by** a coating of the jacket inner faces including the channel internal walls via a cathodic dip-varnishing process.

2. Housing jacket according to claim 1, **characterised in that** the coating thickness is between 10 µm and 50 µm.

3. Housing jacket according to claim 1 or 2, **characterised by** the use of a dipping varnish with a basis of epoxyaminourethane, preferably deposited by a cathophoretic process.

4. Housing jacket according to one of the preceding claims, **characterised by** the manufacture of the jacket body from aluminium.

5. Housing jacket according to one of the preceding claims, **characterised in that** the cooling channels (2) end with apertures freely accessible on the outside opening on to at least a first (5a) of plural housing jacket faces (5a, 5b).

6. Housing jacket according to claim 5, **characterised in that** in a second of the housing jacket faces (5a, 5b) the cooling channels (2) end at a housing wall formed by casting and are thus closed in a sealing-tight manner with respect to the outside.

7. Housing jacket according to one of claims 5 or 6, **characterised in that** the housing jacket faces (5a, 5b) comprise two end faces which are remote from one another and/or parallel to one another, the cooling channels (2) in the first (5a) of which end freely accessibly on the exterior, and the cooling channels (2) in the second (5b) of which end at a housing end wall (6) formed by casting and are thus closed in a sealing-tight manner to the exterior.

8. Housing jacket according to claim 6 or 7, **characterised in that** the second (5b) housing jacket face (6) or end wall formed by casting abuts the remaining housing jacket body in an integral manner.

9. Housing jacket according to claim 7 or 8, **characterised in that** the second (5b) housing end wall (6) formed by casting is provided inside with cavities such that they form deflection chambers and/or transverse ducts (14), which communicate with the cooling channels (2), extend transverse to a hypothetical motor axis of rotation, and join together the channel ends and/or the deflection chambers.

10. Housing jacket according to one of the preceding claims, but at least claim 6, **characterised in that** the housing jacket face (6) formed by casting and sealing the cooling channels (2) has in its cast wall one or more bores (15) or other perforations.

11. Housing jacket according to claim 10, **characterised in that** the bores or perforations have a female thread for the fixing of casting core holding elements and/or for receiving screw-type seals (16).

12. Housing jacket according to claim 11, **characterised in that** the screw-type seals (16) are provided with sealing rings.

13. Housing jacket according to claim 10, 11 or 12, **characterised in that** the bores (15) or perforations are formed as inlets or outlets (7, 11) for coolant and communicate with the cooling channels, optionally via a deflection chamber and/or transverse duct (14).

14. Housing jacket according to one of the preceding claims, **characterised in that** at least on a first housing jacket face (5a) fixing elements (18), e.g. female- threaded bores, are provided in order to mount a cover, e.g. an end shield or pressure ring (17).

## Revendications

1. Enveloppe de carter (1) refroidissable pour une machine électrique, qui est réalisée en tant que pièce formée par moulage, est destinée à recevoir un dispositif concentrique rotor intérieur/stator (23) plus les enroulements et les têtes de bobine (24), avec un passage (3) concentrique et/ou coaxial, symétrique par rapport à un axe de rotation imaginaire de machine et qui est traversée par un ou plusieurs canaux de refroidissement (2, 2a-h) permettant de réaliser une circulation du milieu de refroidissement, **caractérisée par** un revêtement des surfaces intérieures de l'enveloppe, y compris des parois intérieures des canaux, par un procédé de laquage cathodique au trempé.

2. Enveloppe de carter selon la revendication 1, **caractérisée en ce que** l'épaisseur de revêtement se situe entre 10 µm et 50 µm.

3. Enveloppe de carter selon la revendication 1 ou 2, **caractérisée par** l'utilisation d'un vernis au trempé à base d'époxyde-amine-uréthanne, de préférence séparé par cathaphorèse.

4. Enveloppe de carter selon l'une des revendications précédentes, **caractérisée par** une fabrication du corps de l'enveloppe en aluminium.

5. Enveloppe de carter selon l'une des revendications précédentes, **caractérisée en ce que** les canaux de refroidissement (2) se terminent par des ouvertures librement accessibles vers l'extérieur sur au moins un premier côté (5a) de la pluralité des côtés (5a, 5b) de l'enveloppe de carter.

6. Enveloppe de carter selon la revendication 5, **caractérisée en ce que**, pour un deuxième côté des côtés (5a, 5b) de l'enveloppe de carter, les canaux de refroidissement (2) se terminent contre une paroi de carter formée par moulage et sont fermés de façon à être étanches vis-à-vis de l'extérieur.

7. Enveloppe de carter selon l'une des revendications 5 ou 6, **caractérisée en ce que** les côtés (5a, 5b) de l'enveloppe de carter comportent deux côtés frontaux opposés l'un à l'autre et/ou parallèles, avec, pour le premier côté (5a), des canaux de refroidissement (2) se terminant de façon librement accessible vers l'extérieur et pour le deuxième côté (5b), des canaux de refroidissement se terminant contre une paroi frontale (6) de carter qui y est formée par moulage, et en étant fermés de façon à être étanches vis-à-vis de l'extérieur.

8. Enveloppe de carter selon la revendication 6 ou 7, **caractérisée en ce que** le deuxième côté (5b), ferme la paroi frontale (6), formée par moulage, de l'enveloppe de carter ou est d'une pièce avec le corps de l'enveloppe de carter habituelle.

9. Enveloppe de carter selon la revendication 7 ou 8, **caractérisée en ce que** le deuxième côté (5b), la paroi frontale (6) étant formée par moulage, est muni à l'intérieur de cavités, lesdites cavités formant des chambres de déviation et/ou des passages transversaux (14) communiquant avec les canaux de refroidissement (2), s'étendant transversalement par rapport à un axe de rotation imaginaire de la machine et reliant entre elles les extrémités des canaux et/ou les chambres de déviation.

10. Enveloppe de carter selon l'une des revendications précédentes, mais au moins selon la revendication 6, **caractérisée en ce que** le côté (6) de l'enveloppe de carter, formé par moulage et obturant les canaux de refroidissement (2) présente, sur sa paroi moulée, un ou plusieurs trous (15) ou diverses ouvertures.

11. Enveloppe de carter selon la revendication 10, **caractérisée en ce que** les trous ou ouvertures présentent un filet de vis intérieur pour la fixation d'éléments de maintien du noyau de coulée et/ou pour le logement d'organes de fermeture (16) vissés.

12. Enveloppe de carter selon la revendication 11, **caractérisée en ce que** les organes de fermeture (16) vissés sont munis de rondelles d'étanchéité.

13. Enveloppe de carter selon la revendication 10, 11 ou 12, **caractérisée en ce que** les trous (15) ou ouvertures sont réalisés en tant qu'entrées ou sorties (7, 11) du milieu de refroidissement et communiquent avec les canaux de refroidissement, le cas échéant par l'intermédiaire d'une chambre de déviation et/ou un passage transversal (14).

14. Enveloppe de carter selon l'une des revendications précédentes, **caractérisée en ce que**, sur au moins un premier côté (5a) de l'enveloppe de carter, des éléments de fixation (18), par exemple des trous filetés sont réalisés pour appliquer un couvercle, par exemple une flasque-palier ou un élément de serrage (17).
